# EUROPEAN PATENT APPLICATION

(11) **EP 1 816 266 A2**
(43) Date of publication of application: **08.08.2007**
(21) Application number: 07075096.3
(22) Date of filing: 02.02.2007
(51) Int. Cl.: E02D 17/20, A01B 45/04, A01G 1/00

(54) **Device and method for placing turf stacks**

(30) Priority: 02.02.2006 NL 1031047
(71) Applicant: Martens en Van Oord Groep B.V., 4906 CX Oosterhout (NL)
(72) Inventor: Van Oord, Teunis Gijsbert, 4281 LR Andel (NL)
(74) Representative: Hylarides, Paul Jacques

(57) **Abstract**

The present invention relates to a method for placing stacking turfs on an inclining surface, comprising of:
- providing strip-like turf-sods;
- providing a support element provided with an inclining plate;
- lifting a row of first turf-sods with a first crane device and placing the lifted turf-sods at a first height on the inclining plate;
- lifting a row of second turf-sods with the first crane device and placing the lifted turf-sods at a second, greater height on the inclining plate such that the row of second turf-sods partially overlaps the row of first turf-sods;
- repeating the steps of lifting and placing further turf-sods;
- lifting one, two or more overlapping turf-sods of different rows of turf-sods from the inclining plate with a crane device;
- placing the lifted overlapping turf-sods onto the inclining surface.

## Description

The present invention relates to a method and device for placing stacking turfs on an inclining surface, in particular for placing grass turfs as embankment protection.

For the construction of a motorway or an infrastructural engineering structure, part of the work consists of digging ditches and arranging embankment protection. This embankment protection can consist of an upright woven mat positioned at the foot of the embankment/ground surface. The space behind the woven mat is partially filled with soil. Stacking turfs are arranged on top of the soil. In the construction of an embankment for a motorway 15-20 layers of turf-sods may for instance be necessary to cover a side of the embankment.

At present the turf-sods are arranged on the surface manually, which is very labour-intensive. The work is moreover heavy, which can damage the health of personnel. A further drawback is that the turf-sods are often spread in irregular manner over the surface.

It is an object of the present invention to obviate the above stated drawbacks.

According to a first aspect of the invention, there is provided for this purpose a method for placing stacking turfs on an inclining surface, comprising of:
- providing strip-like turf-sods;
- providing a support element provided with an inclining plate;
- lifting a row of first turf-sods with a crane device and placing the lifted turf-sods at a first height on the inclining plate;
- lifting a row of second turf-sods with a crane device and placing the lifted turf-sods at a second, greater height on the inclining plate such that the row of second turf-sods partially overlaps the row of first turf-sods;
- repeating the steps of lifting and placing further turf-sods;
- lifting one, two or more overlapping turf-sods of different rows of turf-sods from the inclining plate with a crane device;
- placing the lifted overlapping turf-sods on the inclining surface.

According to another aspect of the present invention, a system is provided for placing stacking turfs on an inclining surface, comprising:
- a support element provided with an inclining plate;
- a first crane device provided with a first gripping unit for lifting at least one row of strip-like turf-sods and placing the lifted turf-sods at a desired height on the inclining plate, wherein the gripping unit is adapted to place successive rows in overlapping manner on the inclining plate;
- a second crane device provided with a second gripping unit, which is adapted to lift two or more overlapping turf-sods from different rows of turf-sods from the inclining plate and to place the lifted turf-sods onto the inclining surface.

Further advantages, features and details of the present invention will be elucidated on the basis of the description of a preferred embodiment thereof. Reference is made in the description to the figures, in which:
- figures 1-4 show views of preferred embodiments of the invention at various stages of the placing process;
- figure 5 shows a perspective view of a preferred embodiment of a pick-up machine for picking up and positioning grass turf-sods;
- figure 6 shows a cross-section along VI-VI in figure 5;
- figure 7 shows a perspective view of a pick-up machine with grass turf-sods and of a mould provided with a number of rows of grass turf-sods;
- figure 8 shows a perspective view of the mould as it is dragged away;
- figure 9 shows a perspective view of a preferred embodiment of a grass turf-sod laying unit for laying the grass turf-sods, positioned in a predetermined relation, against a surface;
- figure 10 shows a cross-section along X-X of the grass turf-sod laying unit shown in figure 9;
- figure 11 shows a view of the grass turf-sod laying unit after a column of grass turf-sods has been lifted; and
- figure 12 shows a view of the grass turf-sod laying unit immediately before the right-hand embankment is provided with grass turf-sods and the left-hand embankment has already been provided with grass turf-sods.

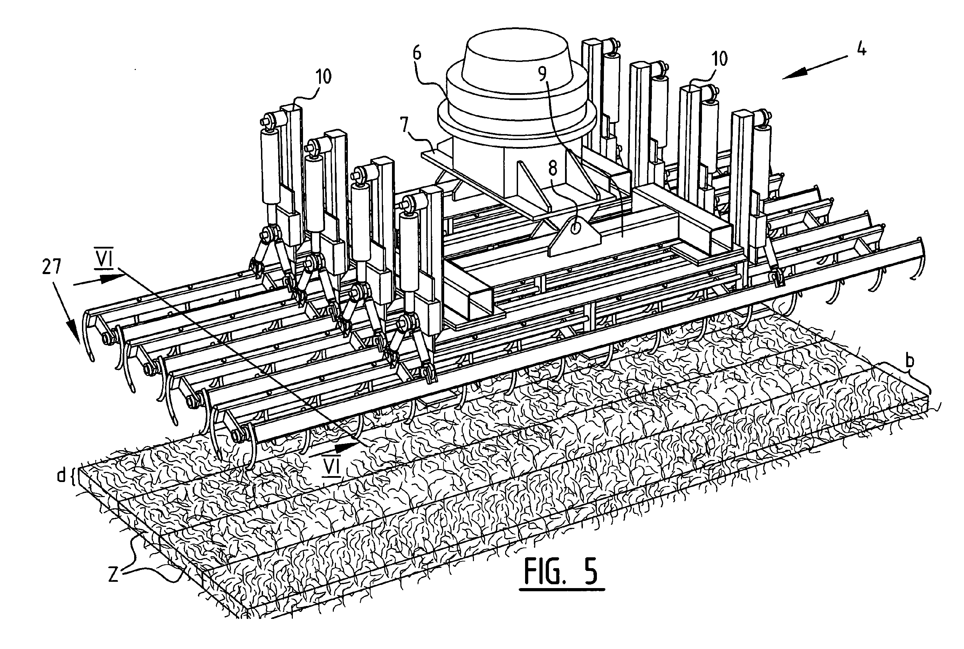

Cutting of the grass turf-sods takes place with a so-called turf cutter. The machine has a standard basis which incorporates customer-specific wishes. An adjustable installation for cutting to length is thus mounted which ensures that turf-sods Z are cut to the correct length. Coulter discs are also placed which provide for cutting of the turf in lengthwise direction. The maximum cutting width of the turf is in the order of magnitude of 1.2 m, wherein the turf can be divided, subject to the number of coulter discs, into strips (with a width (b) of 0.3 m in the situation shown in figure 5). The thickness (d) of the grass turf is variable, characteristically between 2 and 10 cm, and can be preset.

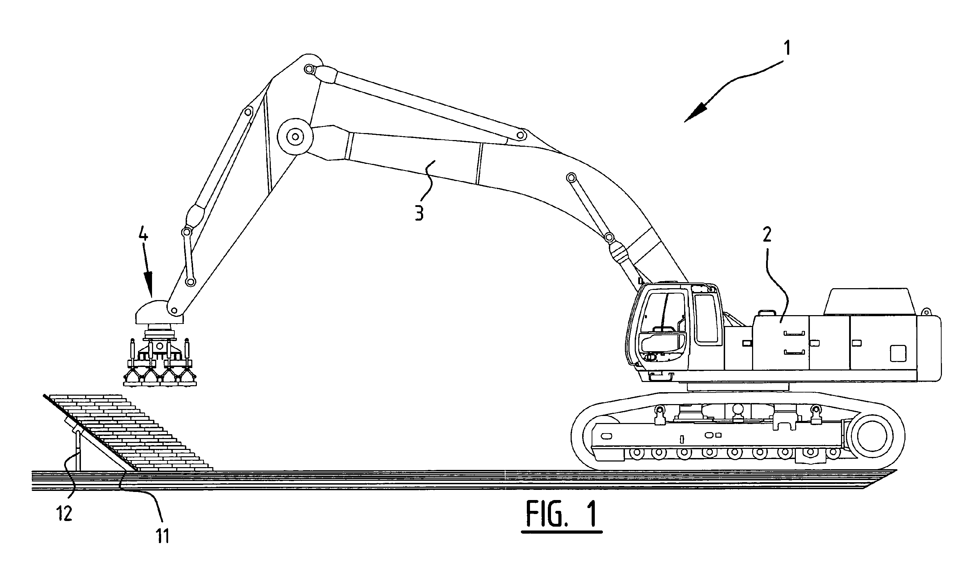

After the turf-sods (Z) have been cut to the correct length, thickness and width, they can be picked up. Provided for this purpose is a pick-up implement, a preferred embodiment of which is shown in figure 1. Pick-up implement 4 is suspended from a mobile platform, such as a hydraulic excavator, by means of a rapid-action coupling. Pick-up implement 4 picks up the cut turf-sods from the land per predetermined number, such as four, by means of claws 27 which grip into the turf-sods hydraulically from the top side. The four turf-sods are then lifted, rotated and placed on a tow plate or carrier 11. This is provided with a mould 12 with a desired embankment inclination (of the ditch side to be covered), so that the turf-sods are stacked in stepped form with the correct overlap. The depth of the ditch ultimately determines how many turf-sods must be stacked during the lifting.

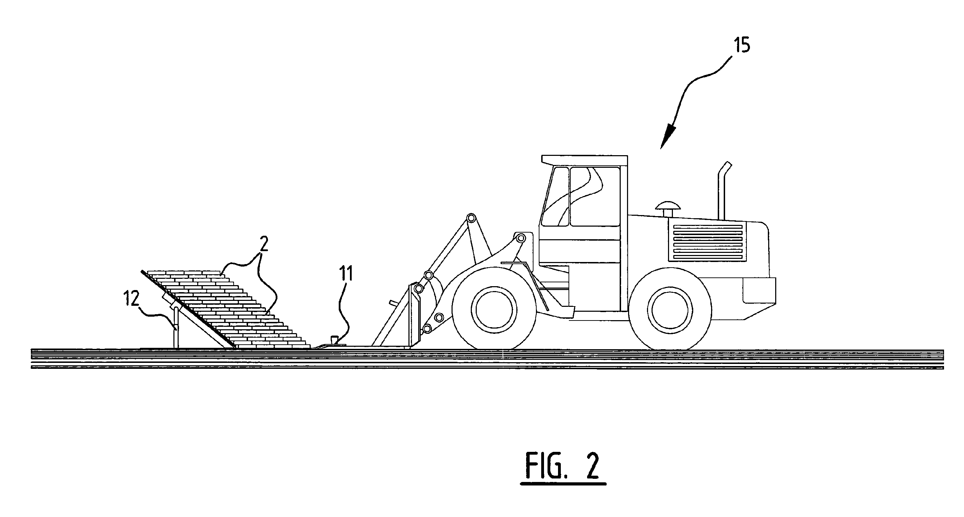

The steel tow plate 11 with turf-sods 2 is dragged to the relevant part of the ditch using a power shovel 15 (figure 2). Should the transporting distance become too great, use will be made of flat carts on which the turf-sods are stacked.

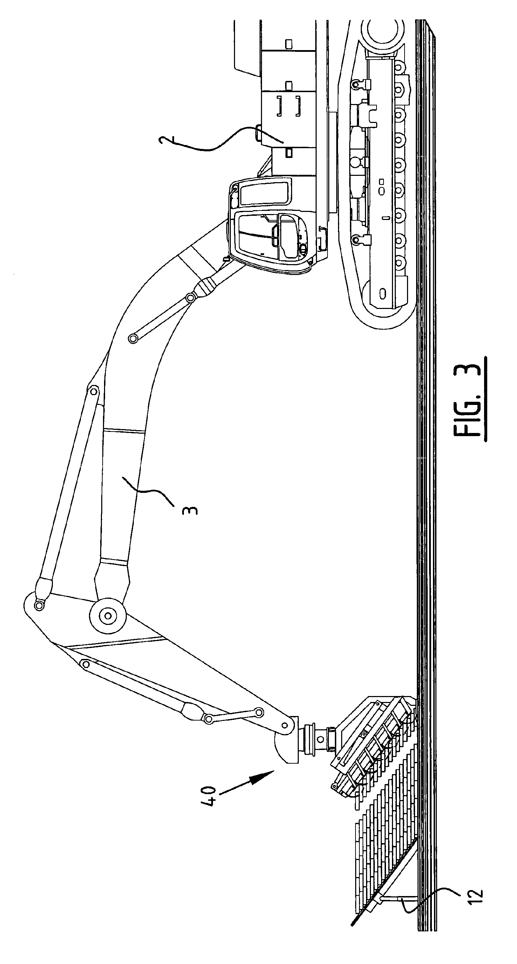

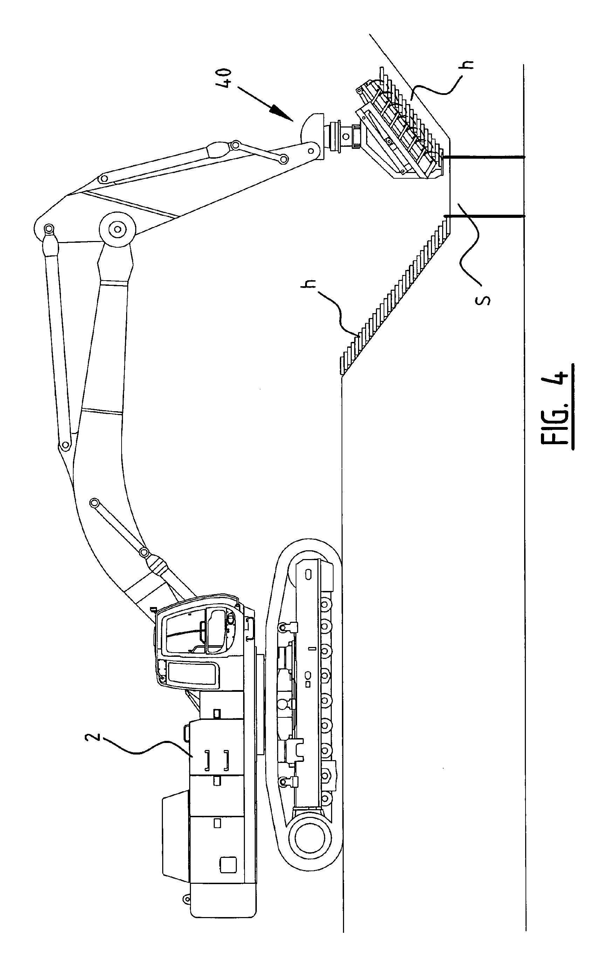

The ditch (S) (shown schematically in figure 4) has already been excavated in profile by a hydraulic excavator and the turf-sods can now be arranged on the embankment. For placing of the turf-sods a subsequent or the same excavator 2 (figure 3) is equipped with a turf laying unit 40. This machine 40 scoops one of the four stacks with turf-sods from the tow plate and clamps it hydraulically against the clamping plates that are present. The driver then places the stack with turf-sods against the slope of the ditch as shown in figure 4. Once the turf-sods are lying in neatly connecting manner the claws are withdrawn from the stack and the opposite side of the ditch can be "covered".

Other layer thicknesses and embankment inclinations can of course also occur. In a determined embodiment of the invention the transport plate and/or stacking turf laying unit can be adapted for this purpose: the transport plate simply by welding a different support construction and the stacking turf laying unit by providing it with hydraulic adjusting cylinders.

A preferred embodiment of the invention is described in more detail hereinbelow with reference to figures 5-12.

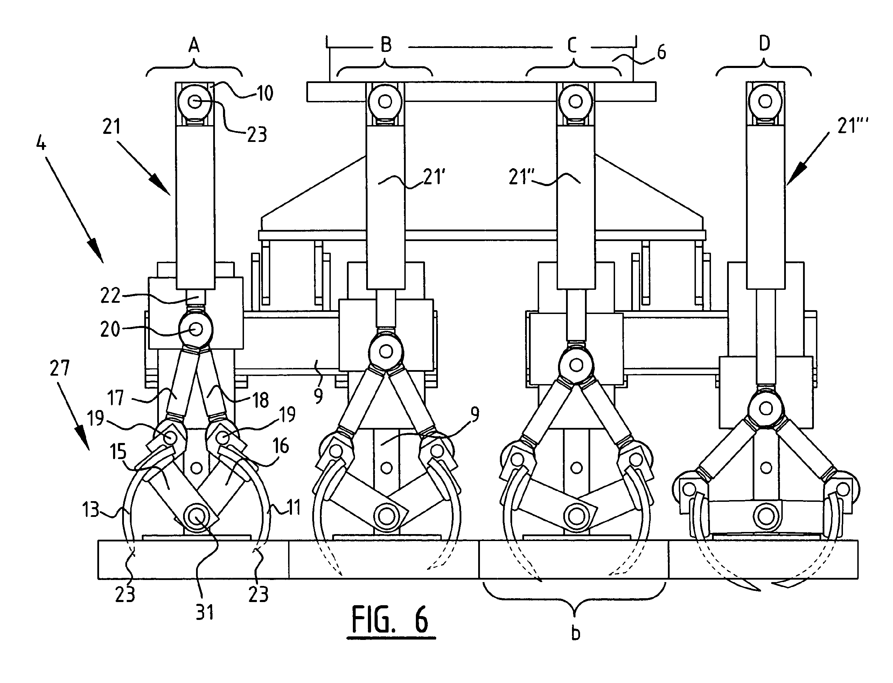

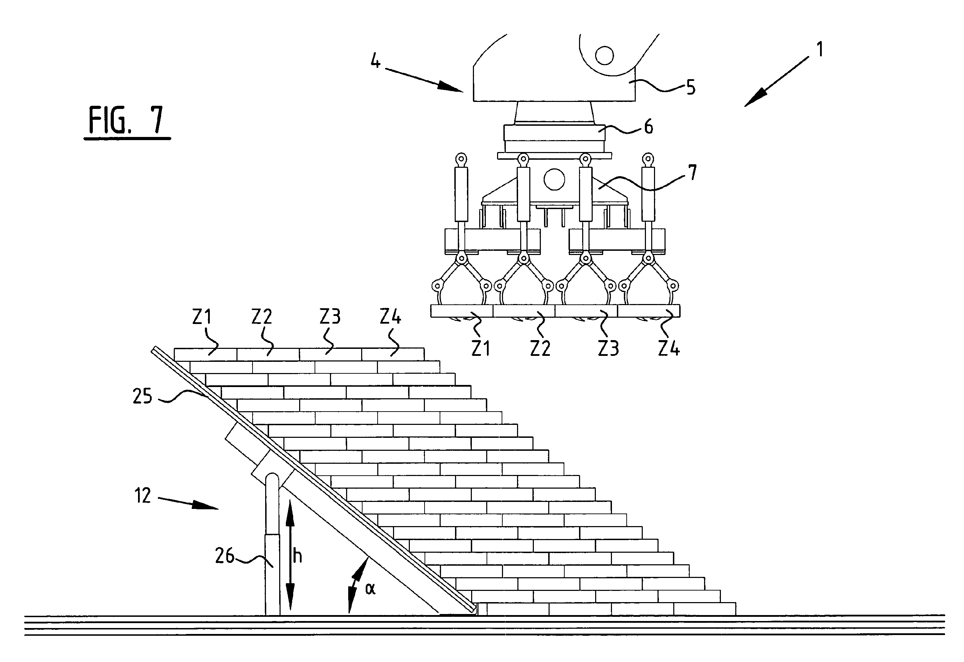

Figures 5 and 6 show respectively a perspective view and a cross-section VI-VI of a preferred embodiment of pick-up implement 4. Pick-up implement 4 can be mounted in known manner on arm 3 of a hydraulic excavator 2. For this purpose pick-up implement 4 comprises a per se known connecting element which is embodied such that in mounted position the pick-up implement 4 is rotatable relative to said arm 3 of excavator 2. Provided on mounting element 6 is a frame 7, on which a further frame 9 is rotatably mounted using a shaft 8. Two sets of four posts 10 are provided on frame 9. Four parallel shafts 31 extending in longitudinal direction (in figure 6 and, in more detail, in figure 7) are also arranged on frame 9. Each of the shafts 31 functions as suspension shaft for one of the above mentioned claws 27 with which grass turf-sods Z can be picked up.

A claw 27 comprises a number of left-hand claw parts 13 and right-hand claw parts 11 on which are provided respective supports 15 and 16. Supports 15, 16 are mounted on shaft 27, this such that claw parts 13, 11 can rotate relative to frame 9. When claw parts 13, 11 rotate toward each other, the outer ends 23 thereof can grasp a grass turf-sod (Z). When the outer ends of claw parts 13, 11 are rotated away from each other the grass strips are once again released. Rotation of claw parts 13, 11 takes place by operating hydraulic cylinders 21, i.e. two hydraulic cylinders per shaft 27. Hydraulic cylinders are mounted at the top side on posts 10 using joints 23, while on the bottom side cylinders 21 or, more specifically, piston rods 22 are coupled to two rotating rods 17, 18 using joints 20. Each of the rotating rods 17,18 is rotatably mounted on the above mentioned claws 27 at the opposite outer end using a respective joint 19.

When piston rod 22 of cylinder 21 is displaced downward (direction P₁) it pushes rotating rods 17, 18 downward, as a result of which the outer ends 23 of claw parts 13, 11 move toward each other. Such a movement is for instance shown in figure 6.

Figure 6 shows from left to right four stages A-D in which claws 10 can be situated. In stage A the outer ends 23 of claws 23 are just inserted into the top layer of a grass turf-sod (Z). By displacing piston 22 of cylinder 21 downward (direction P₁) as shown in stages B-D, claws 27 grip the grass turf-sods (Z) firmly.

Once grass turf-sods Z have been gripped by claws 27, excavator 2 raises pick-up implement 4 and the grass turf-sods are displaced in the direction of the above mentioned mould 12. Mould 12 is constructed from an inclining plate 25 which is shored up using a post 26. In the shown embodiment post 26 is constructed from a telescopic cylinder so that the height H, and thereby the angle of inclination α, of the plate can be adjusted. In other embodiments one or more posts of a constant height are used.

Pick-up implement 4 is positioned above plate 25. The first grass turf-sod (Z₁) up to and including the fourth grass turf (Z₄) are then placed at the lowest position on plate 25 by operating the cylinders 21. As a result the first row of claws 27 is operated and the first grass turf-sod (Z₁) comes to lie at the lowest position on plate 25, the second grass turf (Z₂) comes to lie at the same height but at an offset lateral position, and so on, so that the four strips of grass turf-sods (Z₁-Z₄) are placed mutually in line on plate 25. Excavator 2 is then driven back and grips a second batch of four grass turf-sods from the ground in the above described manner. These four grass turf-sods are placed in a row at a higher position on plate 25, this such that the second row of grass turf-sods partially overlaps the first grass turf-sods. This process is repeated until plate 25 is filled with a sufficient number of grass turf-sods. This situation is shown in figure 7.

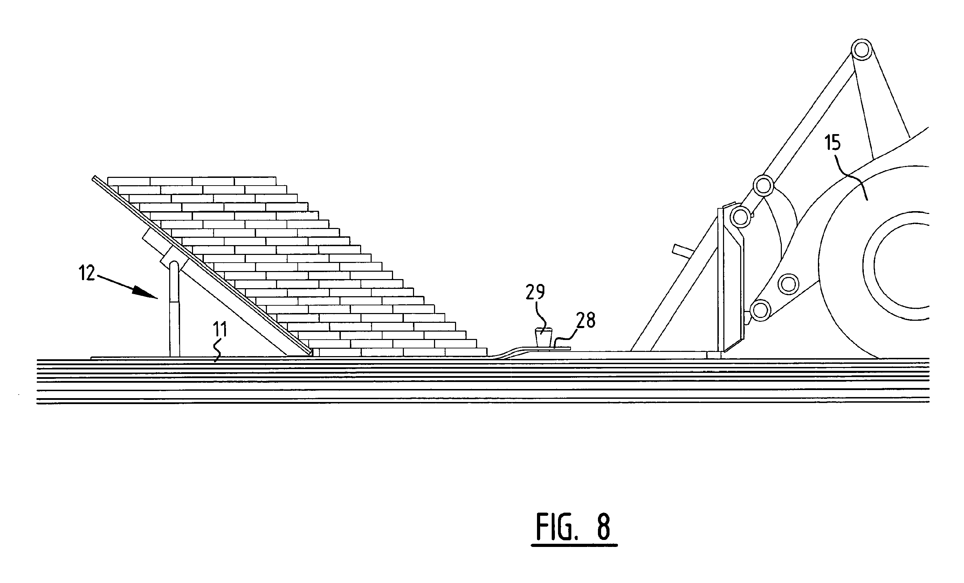

Once sufficient grass turf-sods have been arranged on mould 12, this is dragged using the above mentioned power shovel 15. Arranged for this purpose in tow plate 11 is an opening 28 into which can be inserted a mandrel 29 provided on power shovel 15. Power shovel 15 can then drag the tow plate 11 with mould 12 with grass turf-sods provided thereon to a position close to the embankment to be covered (figure 8).

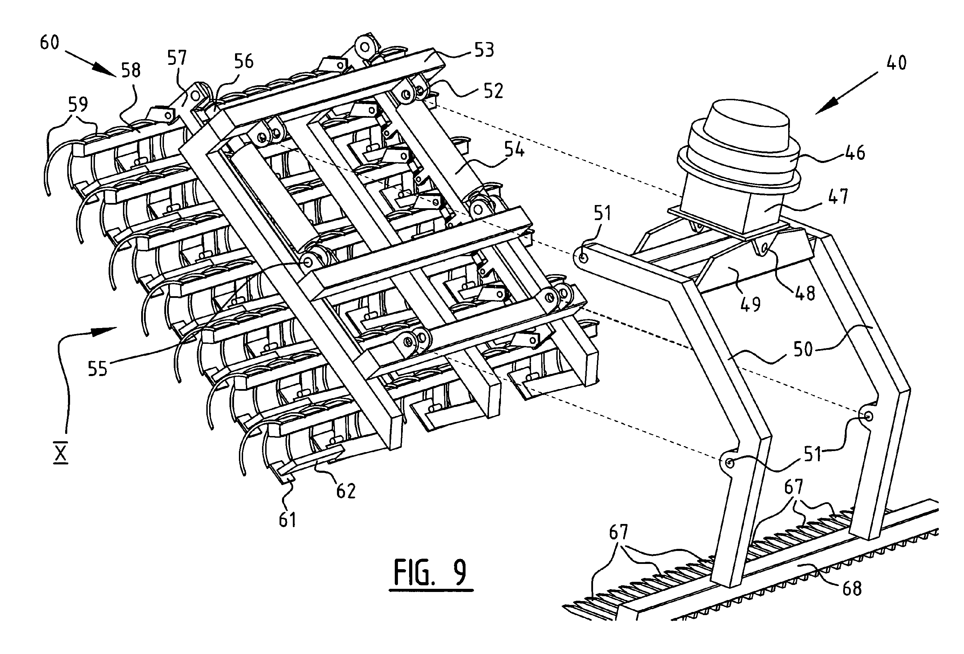

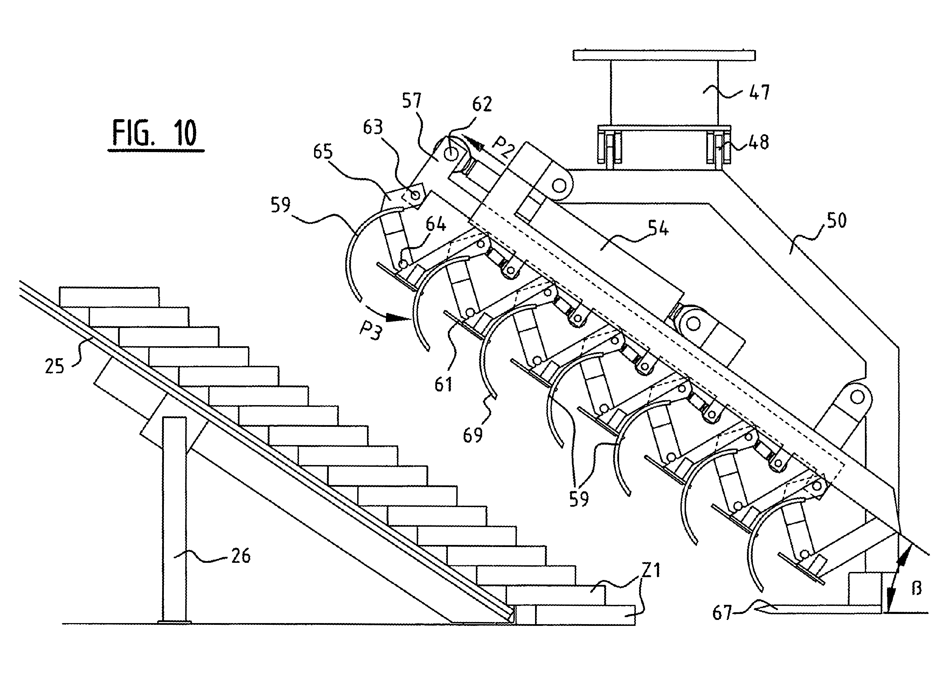

Figures 9 and 10 show respectively a perspective view and a cross-section of an embodiment of a turf laying unit 40. In similar manner as the above described pick-up implement 4, turf laying unit 40 comprises a mounting element 46 with which turf laying unit 40 can be mounted rotatably on arm 3 of an excavator or a mobile platform. Provided on mounting element 46 is a frame 47 which, using a rotary shaft 48, is rotatably mounted on a second intermediate frame 49. Intermediate frame 49 is hereby mounted pivotally on arm 3 of the excavator.

Arms 50 are arranged on either side of intermediate frame 49. Openings 51 are provided in arms 50 so that a turf laying part 60 can be mounted on the arms. Turf laying part 60 comprises a frame 53 on which two hydraulic lifting cylinders 54 are arranged. Hydraulic lifting cylinders 54 are on the one hand mounted pivotally on frame 53 itself, and piston part 56 of lifting cylinders 54 is on the other hand mounted pivotally with joints 62 on an elongate support element 57. Hinges 63, on which are mounted supports 65, are provided on elongate support element 57. On the other side the supports 65 are mounted using hinges 64 on support parts 62 fixedly attached to frame 53. Support parts 62 are provided on the underside with flanges 61, against which the grass turf-sods can be clamped during use. Supports 65 are arranged pivotally such that claw parts 59 are rotated shut when piston 56 of lifting cylinders 54 is displaced in direction P₂, and thereby elongate support part 57 is displaced, as is shown in figure 10.

In the shown embodiment frames 50 and 53 are embodied such that angle of inclination β (as shown in figure 10) almost corresponds with the above stated angle of inclination α of plate 25 of mould 12. This means that the shown embodiment of turf laying unit 40 is in principle only suitable for a fixed embankment inclination. When the turf laying unit is used for covering an embankment with a different inclination, another frame 50 has to be used which provides the correct angle of inclination β between turf laying part 60 and the ground, In another embodiment which is not shown, an adjusting mechanism is however provided with which the angle of inclination can be adjusted.

Provided on the underside of frame 50 is a beam 68 from which a large number of pins 67 extend. Pins 67 serve to pick up the bottom row of turf-sods, as will be explained hereinbelow.

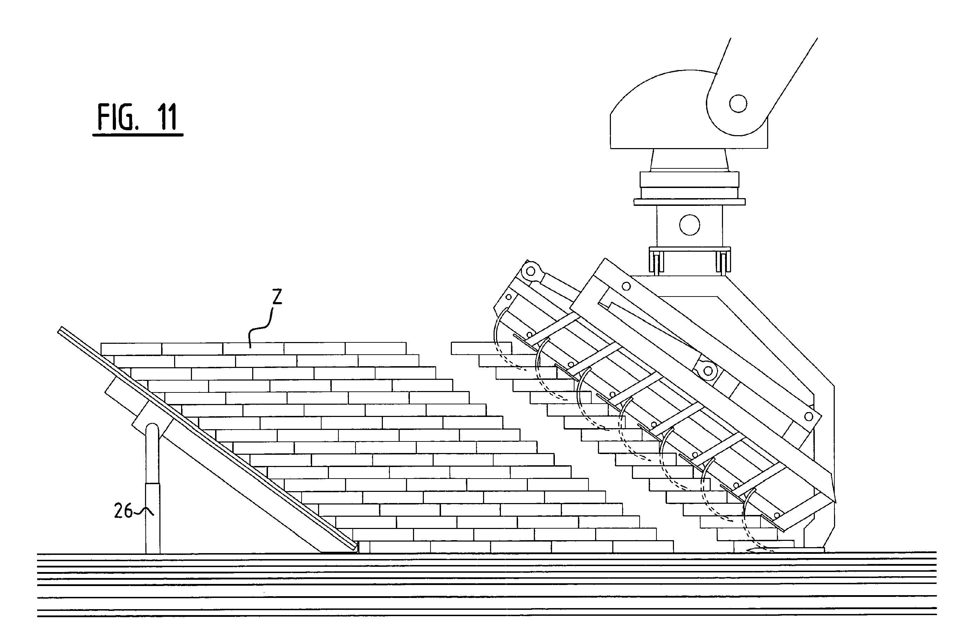

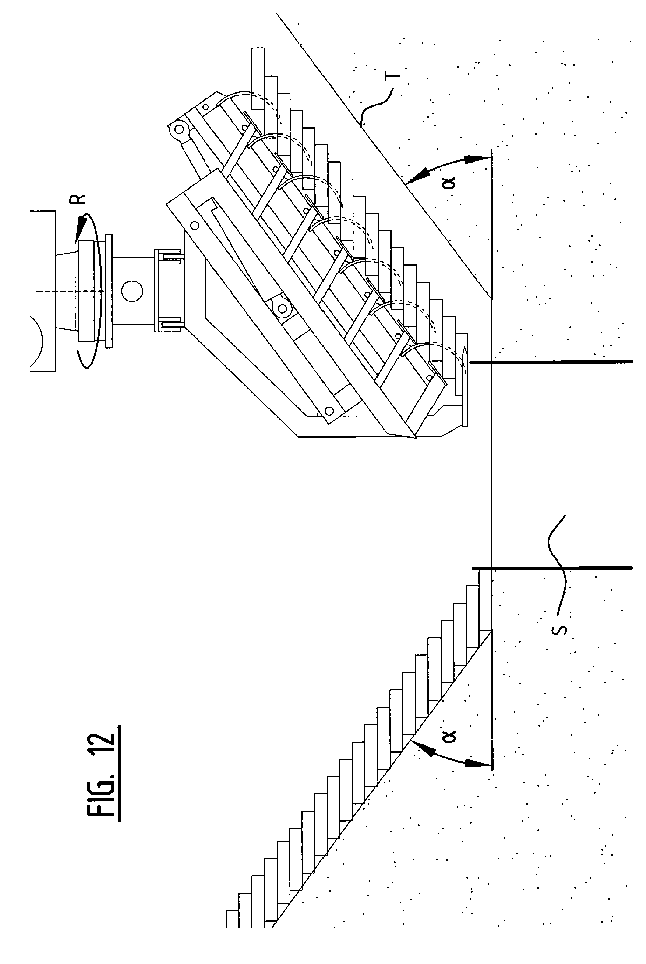

Figures 10 and 11 further show lifting of the grass turf-sods. The grass turf laying unit 40 grips a number of turf-sods arranged at different heights (also referred to below as a column) by operating lifting cylinders 54. As a result the claw parts 59 are displaced inward (direction P₃) so that outer ends 69 of claw parts 59 pass straight through two or more partly overlapping grass turf-sods Z placed one above the other. In this manner a whole column of grass turf-sods can be gripped at once in a single operation. Pins 67 ensure that the bottom grass turf cannot slide off the ends of claw parts 59 during transport. The column of grass turf-sods, thus picked up at a correct angle of inclination, can then be placed in one movement against the embankment to be protected, as shown in figure 12.

It is noted that when the angle of inclination α of the right-hand embankment is equal to the angle of inclination α of the left-hand embankment, the lifted column of grass turf-sods can also be arranged on the left-hand side of the embankment by simply rotating (R₁) turf laying unit 40 along a vertical axis, without modifications of any kind whatever of turf laying unit 40 being required here.

Once the column of grass turf-sods has been placed above embankment T, pistons 56 of cylinders 54 are displaced in the opposite direction so that claw parts 59 open and the grass turf-sods are released therefrom. The grass turf-sods then come to lie in one movement on the embankment in a correctly stacked situation, as shown in figure 12. A new column of grass turf-sods arranged in overlapping relation is then collected and arranged at a subsequent position on the embankment.

In the manner described here stacking turfs can be placed against any random slope in rapid and efficient manner with minimum human labour. It has been found that speeds of about 25-40 running metres of stacking turfs per hour can be achieved using only one or several operatives.

The rights sought are not defined by the above described preferred embodiments of the invention, but by the following claims, within the scope of which many modifications can be envisaged.

## Claims

1. Method for placing stacking turfs on an inclining surface, comprising of:
- providing strip-like turf-sods;
- providing a support element provided with an inclining plate;
- lifting a row of first turf-sods with a crane device and placing the lifted turf-sods at a first height on the inclining plate;
- lifting a row of second turf-sods with the first crane device and placing the lifted turf-sods at a second, greater height on the inclining plate such that the row of second turf-sods partially overlaps the row of first turf-sods;
- repeating the steps of lifting and placing further turf-sods;
- lifting one, two or more overlapping turf-sods of different rows of turf-sods from the inclining plate with a crane device;
- placing the lifted overlapping turf-sods onto the inclining surface.

2. Method as claimed in claim 1, comprising of placing successfully on the inclining surface a number of rows of turf-sods fitting together.

3. Method as claimed in claim 1 or 2, comprising of providing the plate at an angle of inclination substantially corresponding to the angle of inclination of the surface.

4. Method as claimed in any of the foregoing claims, comprising of placing the turf-sods on the inclining plate in lying position.

5. Method as claimed in claim 4, comprising of lifting in one lifting movement and/or placing on the inclining plate in one placing movement two or more turf-sods extending mutually in line.

6. Method as claimed in any of the foregoing claims, comprising of lifting two or more overlapping turf-sods from the inclining plate in one lifting movement and/or placing two or more overlapping turf-sods on the surface in one placing movement.

7. Method as claimed in any of the foregoing claims, in which a system is applied as claimed in any of the claims 8-11.

8. System for placing stacking turfs on an inclining surface, comprising:
- a support element provided with an inclining plate;
- a first crane device provided with a first gripping unit for lifting at least one row of strip-like turf-sods and placing the lifted turf-sods at a desired height on the inclining plate, wherein the gripping unit is adapted to place successive rows in overlapping manner on the inclining plate;
- a second crane device provided with a second gripping unit, which is adapted to lift two or more overlapping turf-sods from different rows of turf-sods from the inclining plate and to place the lifted turf-sods onto the inclining surface.

9. System as claimed in claim 8, wherein the crane device is an excavator and the gripping unit is provided with a number of hydraulically controllable claws with which turf-sods can be picked up.

10. System as claimed in claim 8 or 9, also comprising a transport device for transporting the support element.

11. System as claimed in any of the claims 8-10, wherein the angle of inclination of the plate substantially corresponds to the angle of inclination of the surface.

12. Method and/or system as claimed in any of the foregoing claims in which the turf-sods are grass turf-sods and the inclining surface is an embankment.
